# EUROPEAN PATENT SPECIFICATION

(11) **EP 3 072 420 B1**
(45) Date of publication and mention of the grant of the patent: **29.08.2018**
(21) Application number: 16162201.4
(22) Date of filing: 24.03.2016
(51) Int. Cl.: A47B 23/00, A47C 7/38, A47C 7/02, A47C 16/00, B60N 2/882

(54) **TRAVEL SUPPORT DEVICE FOR SUPPORTING HEAD OF HUMAN WHILST IN A SITTING POSITION**
REISESTÜTZVORRICHTUNG ZUM STÜTZEN DES KOPFS EINER PERSON IN EINER SITZPOSITION
DISPOSITIF DE SUPPORT MOBILE POUR LE SUPPORT DE LA TÊTE D'UN ÊTRE HUMAIN DANS UNE POSITION ASSISE

(30) Priority: 24.03.2015 GB 201504989; 16.03.2016 GB 201604462
(43) Date of publication of application: 28.09.2016
(73) Proprietor: Symms, Kays Kanyie, London SW14 9DE (GB)
(72) Inventor: Symms, Kays Kanyie, London SW14 9DE (GB)
(74) Representative: Ashton, Gareth Mark

(56) References cited:
- WO-A2-2007/068950
- CN-Y- 2 480 220
- FR-A- 1 076 118
- US-A1- 2005 066 445

## Description

### FIELD OF INVENTION

The present invention relates to travel support device for supporting the head of a human whilst in a sitting position.

### BACKGROUND OF INVENTION

It is well recognized that the sedentary traveling process can be tedious and uncomfortable, with the most prevalent issues being the inability to rest or sleep comfortably in an upright sitting position, having comfortable and appropriate seating, or having surroundings that offer a general purpose worktop.

When sleeping or resting in an upright position, the only solace for the traveler may be a reclining chair or leaning against an adjacent surface without conforming cushioning. However, when reclining chairs or supportive surfaces are unavailable, the individual is more than likely to experience discomfort. As the person enters a state of sleep, the muscles relax, and the torso and neck are unable to structurally function as per normal. Thereafter, the body will naturally tend to slump with the head falling forward towards chest or dipping sideways towards either shoulder. Due to the strain, the muscles will eventually begin to ache, causing discomfort to the individual.

It has been noted that most of the prior art devices have attempted to resolve this issue, but none have managed to deliver a device that affords full structural support, whilst offering additional functional features. A number of the devices rely on utilizing surrounding structures such as tables, windows, walls, reclining seats, high back chairs or seat restraining straps in order to effectively function. One such device and the most commonly used support is the horseshoe shaped travel pillow that is fitted behind the neck against a chair backrest. The horseshoe pillow provides minimal support by only enabling the head to rest in a backwards-reclined position, but does not prevent forward tilting motion support for the user. In vehicles, seat belt restraints have been fitted with cushioned wrap-around devices that have proved ineffective, because they only provide support on the side that the restraint is located and the user is unable to rest in any other position.

The following cited references refer to the most pertinent prior art in relation to the present head, neck and torso support aspect of the present invention.

US Pat. No. 6,973,691 (Cordova) discloses an elongated support device resting between one thigh and the chin, allowing the user to rest the face in a crescent shaped cradle raised to one side, whilst propped up on the thigh that is also elongated on one side. This art only allows for the head to be effectively rested on the raised side of the cradle and would require adjusting to accommodate the other side of the head. The continuous weight compression required to maintain the head cradled, along with sleeping in one stationary forward tilting position for prolonged periods may result in aching muscles. The prior art also has removable parts.

US Pat. Application Publication 2015/0020314 (Garcia) discloses a portable v-shape pillow that cradles the head in a forward tilting position and prevents movement. The device is suspended on the upper torso by straps located on the pillow that extend to the user's back. The v-shape does not naturally conform to the shape of the face, which is generally rounded. Also, the supporting straps may cause markings onto the user's skin when in use, due to the weight exerted by the tilting head. In addition, it only supports the user whilst resting in a forward motion, with no scope for the head to recline back or rest sideways towards the shoulders. The device requires setup in the form of adjusting the supporting straps to the desired position.

US Pat. Application Publication 2002/0050009 (Ley) describes a support structure featuring an adjustable face pad mounted onto the height adjustable thigh rests. US Pat. No. 6,270,160 (Blake) describes an adjustable support that consists of a top tray for the head pivoted on the thigh. Both devices have complex moving parts, require initial setup and involve the user resting in a static position to prevent the devices from shifting.

US Pat. No. 4,560,201 (Scott) discloses a head support device comprising of a strap that is fixed around the user's head and forearm, and adjusted by moving the arm. The head restraint is likely to create tightness around the head due to the tension exerted by adjusting the arm, which keeps the user upright. It is also likely to interfere with the user's hairstyle and mark the skin on the user's arm and forehead.

US Pat. No. 6,135,560 (Fagg) discloses a headrest that supports the user against an adjacent upright surface. The device is only effective when the user is within reach of a supporting surface, which may not always be available or suitable.

US Pat. No. 5,645,319 (Parks Jr) discloses an inflatable travel pillow placed on a horizontal surface directly in front of the user and ideally in tandem seating. US Pat. No. 4,235,472 (Sparks) is a pillow that consists of several polystyrene blocks that are stacked to create support. The prior art consists of multiple sections that have to be combined to create the support. Both solutions are bulky, making them inconvenient to carry for personal use.

US Pat. No. 4,565,408 (Palley) discloses a collar support with two elongated sheaths connected by an adjustable chinstrap that cradles across the jaw. This device requires set up, does not support the torso and has sleep position limitations.

US Pat. Application Publication 2013/0232693 (Myers) discloses a travel pillow for supporting a person's head in multiple different positions. This enables the head to rest in a backwards-reclined position, but does not prevent forward tilting motion support for the user.

Another issue associated with travel, is the lack of comfortable seating, mostly experienced with chairs that have little or insufficient cushioning. Furthermore, some seats have no backrests or arm rests to support the traveller.

Also, safety belt restraints in standard motor vehicles are only appropriate for individuals of a particular height and if that height criterion were not met, the traveler would not be appropriately fastened. Therefore, certain motor vehicles, airplanes or other modes of transport would require some short travelers use height booster seats, for the safety restraints to effectively work.

Lastly, there are instances when travelers require a flat surface to write, eat or work on, which are not always available. Some modes of transportation have fold down trays provided in tandem seating, but there are instances when such implements are absent or may not be convenient to have one.

In all scenarios, support devices such as pillows, individual height booster seats, support cushions, foldaway or portable trays and desks are used to achieve the desired comfort when travelling. A journey with all the various individual travel devices can be inconvenient and take up a lot of space.

CN 2480220 discloses a travel sleeping pillow, which comprises a turtleneck air bag and a connecting supporting air bag arranged under the turtleneck air bag.

Accordingly, the object of the present invention is to provide a travel device with multiple functions that solves one or more of the abovementioned problems.

### SUMMARY OF INVENTION

According to the invention, there is provided a travel support device for supporting a head of a human whilst in a sitting position. The travel support device comprises a top portion, a bottom portion, and a middle portion extending from the top portion to the bottom portion. The top portion comprises a head cradle for receiving the head of a human with a front side of the travel support device facing forwardly in a same direction as the human. The middle portion comprises a front section extending from the top portion to the bottom portion at the front side of the travel support device, and a back section extending from the top portion to the bottom portion, at an opposite side of the middle portion from the front section, wherein the back section has a dip which reduces a thickness of the middle portion between the front and back sections at the dip. The bottom portion comprises a bottom edge for resting upon the thighs of the human whilst the human is in a sitting position with the head of the human received in the head cradle, the middle portion transmitting the weight of the head to the thighs. The head cradle is a cut-away in the top portion, the cut-away being centered at half-way across a width of the travel support device and in a top edge of the travel support device, the top edge being opposite from the bottom edge. The dip is a substantially circular depression in the back section, for receiving the head or the buttocks of the human when the travel support device is positioned in an alternate orientation relative to the human.

When used as a travel pillow in a seated position, the travel support device is placed between the user's thighs and lower jaw, extending along the sides of the neck adjacent the shoulders, enabling the head and upper torso to be fully supported in an upright posture. The head is cradled allowing the user to rest in a forward incline. The weight compression between the thighs and lower jaw enable the device to remain in place. The device limits head movement to within the cradle, permitting the head to freely rest in a forward incline, while still being able to adjust it left to right, and also, in a sideways tilting motion towards the shoulders without the need to use the hands or additional aides. When the traveler is resting upright and the muscles are relaxed, the device becomes a secondary support for holding up the back and neck skeletal system, preventing the body from leaning or slumping. The travel support device is portable, so that it can easily be carried around during travelling, and may be sized for children or adults.

Optionally, the travel device may further be used as, a conventional pillow, a seat support cushion for comfort and/or elevation and a portable serviceable desk when placed on the thighs. Advantageously, the dip in the back section allows the travel support device to be used in a variety of different positions with respect to the human body, beyond the positioning of the device between the head and thighs. The dip may for example be in the middle of the back section.

The ergonomic design of the device allows it to be used in various positions. For example, the dip in the device can be positioned in a number of ways behind an individual's head against a vertical or horizontal surface, to support the user while seated or laying down. The device may be used as a sitting cushion for additional comfort or for increasing the sitting height of the user, and the dip may form a comfortable and stable area of the cushion for the individual to sit in. Accordingly, the travel support device is a multi-functional device. The dip may provide a concave surface in which the head or buttocks can rest.

The travel support device may be formed as a singular, or in other words unitary, body. Accordingly, there may be no need for any straps or supports for the travel support device to function. The travel support device is ideal for use in multiple positions on any sitting surface with or without a backrest or even a reclining chair, without the need for additional device or structures. The singular body may be contoured to define the top, middle and bottom portions.

The cut-away is positioned half way along the width of the device, i.e. centrally, at the top of the device. Optionally, the cut-away may be a semi-circular cut-away for optimum comfort and support, and to complement the shape of the lower jaw and lower face.

The travel support device is ideal for use in multiple positions on any sitting surface with or without a backrest or even a reclining chair, without the need for additional device or structures.

The top portion may further comprise two arm extensions which extend backwardly away from the head cradle, in a direction substantially perpendicular to the extension of the middle portion from the top portion to the bottom portion, for locating over respective shoulders of the human. Substantially perpendicular in this context means within 45 degrees of perpendicular. The arm extensions enable some of the weight of the head to be distributed onto the shoulders, and simultaneously provide a new support for the head to tilt sideways. Accordingly, the travel support device may support the head, neck and torso of a person resting or sleeping in a sitting position, allowing the head to rest in a forward and/or sideways leaning position.

The arm extensions may be symmetrical to one another. Preferably, the arm extensions seamlessly emerge from the tops of the head cradle, the tops forming opposing sides of the cut-away in the head portion.

A width direction of the travel support device extends perpendicular to the extension of the middle portion from the top portion to the bottom portion, and perpendicular to the thickness of the middle portion between the front and back sections. The widths of the top, middle, and bottom portions may be substantially the same as one another. The thickness of the middle portion all along the width of the middle portion at the bottom portion, and optionally all along the width of the middle portion at the top portion, may be greater than the thickness at the dip.

Preferably, the front section is planar, or in other words flat, at the front side of the travel device. Then the front side can stably rest against other flat surfaces, and may be used as a desktop. For example, if the back section is laid upon the thighs of an individual in a sitting position, with the arm extensions closely positioned next to one thigh, then the planar front section of the device can be used as a multi-purpose workable surface, or a functional portable desk, for writing, eating or other general uses requiring a flat supporting surface.

Advantageously, the travel support device may comprise a storage compartment located between the head cradle and the bottom edge, which is accessible from either the front section, back section, or bottom edge. Therefore, the device may be used to help carry item(s) around with an individual whist travelling.

The travel support device may be encased in a removable and washable cover. Preferably, the cover conforms to the shape of the travel support device, and is made of a soft material for comfort against the skin of the individual using the device.

The travel support device may be fitted with shoulder straps between each arm extension and the bottom portion, and the straps may assist in carrying the device or be used to further secure the device whilst in use as a support pillow.

The travel support device may be housed in a housing of a rucksack or backpack type bag, the housing being an approximately cuboid shaped housing located between shoulder straps of the bag and a main bag storage compartment of the bag.

### BRIEF INTRODUCTION TO DRAWINGS

Embodiments of the invention will now be described by way of non-limiting example, and with reference to the accompanying drawings, in which:
**FIG. 1** illustrates a frontal perspective view of a travel support device according to a first embodiment of the invention, in use as a pillow;
**FIG. 2** illustrates another frontal perspective view of the travel support device shown in **FIG. 1****;**
**FIG. 3** illustrates a frontal view of the travel support device of **FIG. 1** in use in a seated position;
**FIG. 4** illustrates another frontal view of the travel support device of **FIG. 1****;**
**FIG. 5** is a close up frontal view of the head and lower jaw cradle of the travel support device of **FIG. 1****;**
**FIG. 6** illustrates a rear view of the travel support device of **FIG. 1****;**
**FIG. 7** illustrates a plan view of the travel support device of **FIG. 1****;**
**FIG. 8** illustrates an underside view of the travel support device of **FIG. 1****;**
**FIG. 9** illustrates a side view of the travel support device of **FIG. 1****;**
**FIG. 10****,** **FIG. 11** and **FIG. 12** illustrate the travel support device of **FIG. 1** when used as a conventional pillow in various positions, with the head supported in the dip of the back section;
**FIG. 13** illustrates another use of the travel support device of **FIG. 1****,** where the travel support device is utilized behind the user's back;
**FIG. 14** illustrates another use of the travel support device of **FIG. 1****,** where the travel support device is used as a seat cushion/booster seat;
**FIG. 15** illustrates the travel support device of **FIG. 1****,** where the travel support device is used as portable desk on the user's lap;
**FIG. 16** illustrates a travel support device according to a second embodiment of the invention, and having a storage compartment, and being fitted with straps; and
**FIG. 17A, FIG. 17B** and **FIG. 17C** illustrate a bag with a specialized compartment to store and carry the travel support device of the first or second embodiments.

The drawings are not to scale, and same or similar reference numerals denote same or similar features.

### REFERENCE NUMERALS IN DRAWINGS

**1** Bottom
**2** Head/lower jaw cradle
**3** Front
**4** Arm extensions
**5** Top of arm extensions
**6** Bottom of arm extensions
**7** Contoured/back/dip/buttock support
**8** Length (top to bottom)
**9** Width
**10** Width of arm extension/top of arm cradle
**11** Device thickness
**12** Bag storage compartment for travel device
**13** General bag storage compartment
**14** Bag shoulder straps
**15** Bag zipper
**16** Cradle curvature depth
**17** Cradle width
**18** Device storage compartment
**19** Device carry/support straps

### DETAILED DESCRIPTION OF DRAWINGS

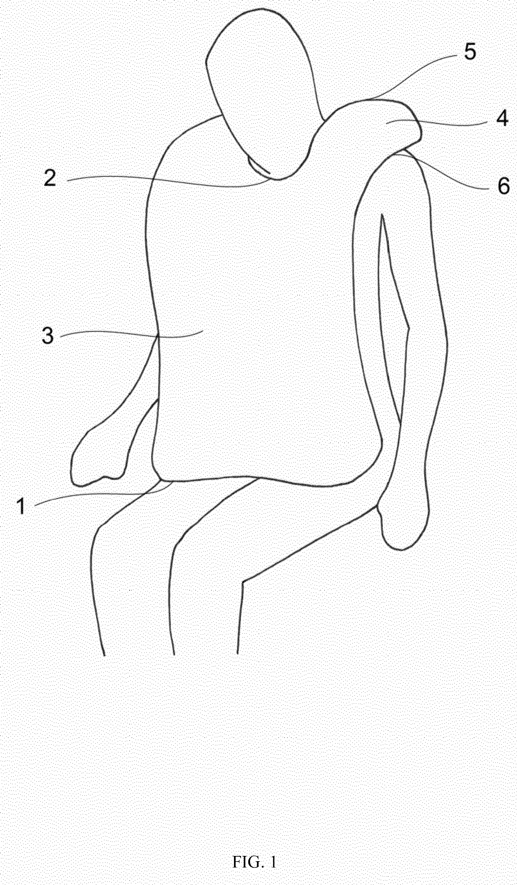

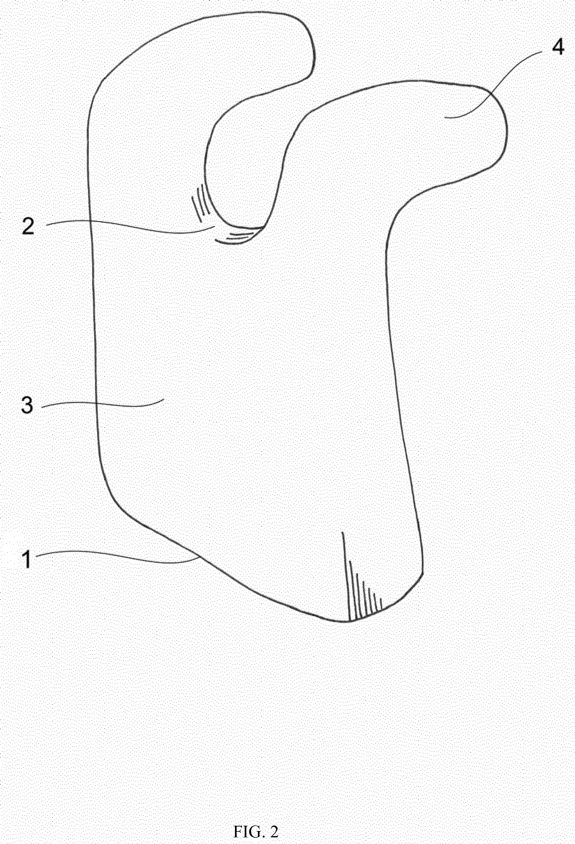

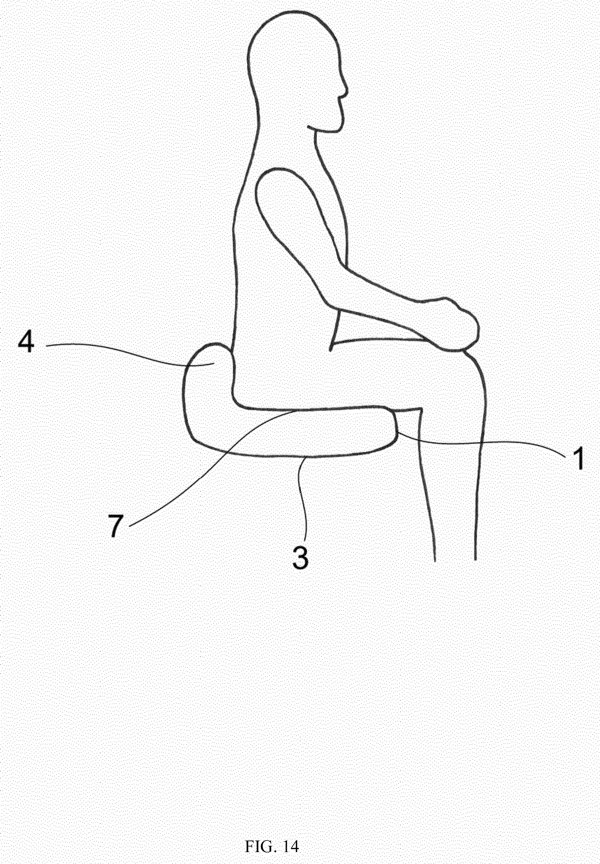

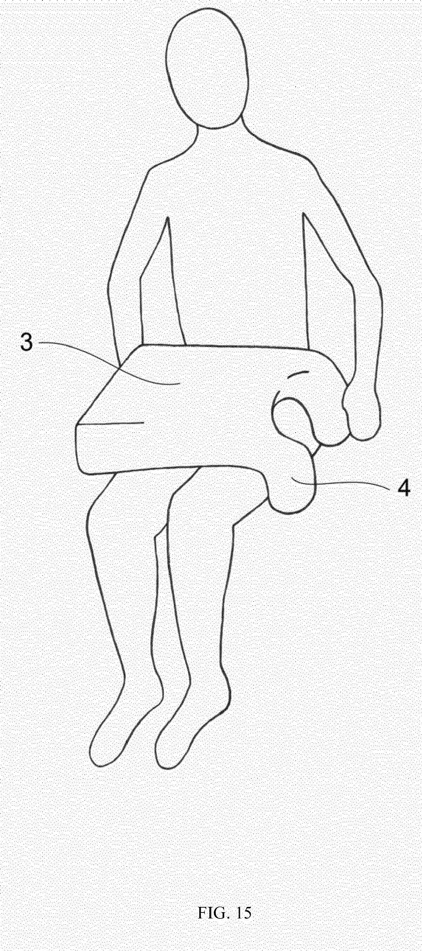

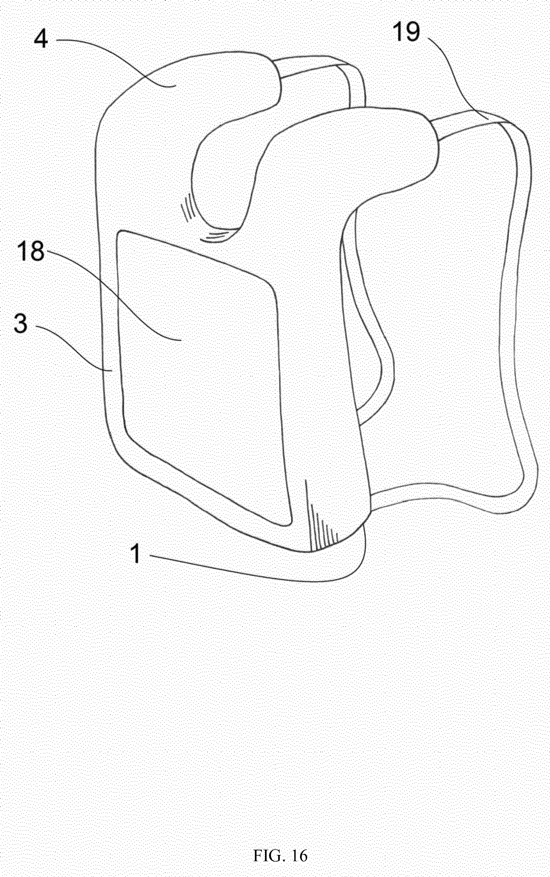

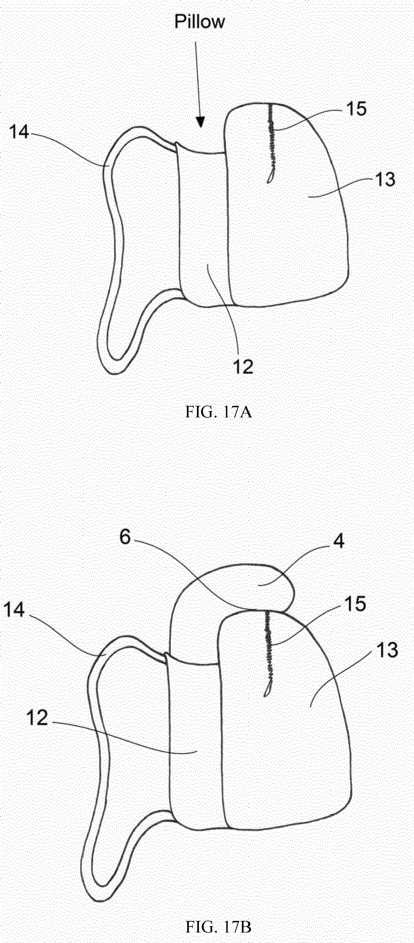

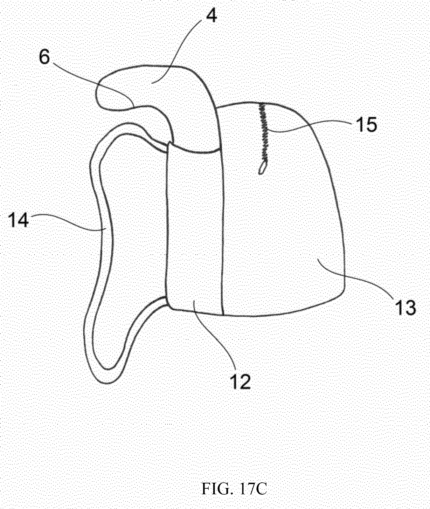

Hereinafter, the features and advantages of the present invention will be explained with reference to **FIG. 1 to FIG. 17****.** Firstly, **FIG. 1** to **FIG. 13** are used to describe use of the travel support device as a portable support pillow. Secondly, **FIG. 14** is used to describe use of the travel support device as a seat support, and **FIG. 15** is used to describe use of the travel support device as a represents a portable desk. Lastly, enhancement features are added to the travel support device, as shown in **FIG. 16****,** where travel support device has a storage compartment and is fitted with support straps, and as shown in **FIG. 17** **(A, B &C),** a carry bag for the travel support device.

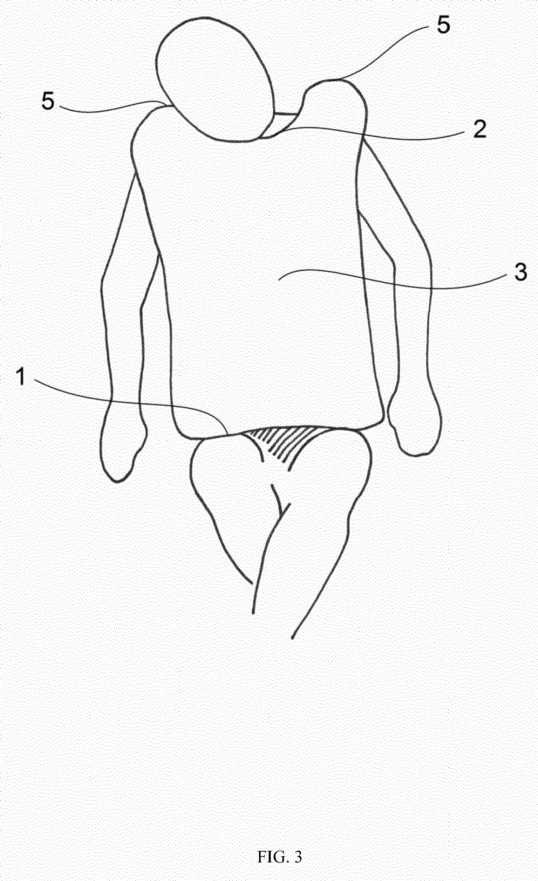

**FIG. 1** and **FIG. 3** illustrate a first embodiment of the travel support device in use as a travel pillow, by placing it between the thighs and the lower jaw to support the entire upper body while an individual is resting or sleeping in a seated upright position. The travel support device is anchored on the shoulders, to support the individual's head, neck and upper torso. The bottom edge of the device rests on the thighs, the middle portion is positioned next to the torso, and the head cradle receives the lower jaw, with the arm extensions extending along the sides of the lower face and neck and secured on the shoulders. The front side **3** of the device faces forwardly, in the same direction as the individual is facing.

This permits the individual to rest the lower jaw and face in a forward inclined position at any point on the cradle, keeping the user's backbone approximately straight, preventing the upper body from slumping while rested, and also permits the individual to rest either side of the head in a tilted sideways position at any point on the arm extensions, keeping the user's backbone approximately straight, preventing the upper body from slumping while rested. The device may be maintained in the desired position by the compression of the middle section between the head and thighs, and anchoring of the arm extensions over the individual's shoulders for additional support and weight distribution.

The pillow device props up the head, neck and torso of the user when the muscles are relaxed. The bottom edge of the device **1** is placed on both the thighs, whilst the head cradle **2** is placed under the lower jaw. The weight compression between the two points enables the support device to remain in place without additional aides. The device props up the user's head while secured on the thighs enabling the back to remain approximately straight in its natural position and preventing the upper body from slumping. The device can be used on any surface with or without a backrest without the need for additional aides. The bottom edge of the device **1** is relatively straight to conform to the shape of both the top of the thighs.

The cradle **2** is semicircular to conform to the lower jaw and to permit the head to rest comfortably at any point of the cradle. The cradle **2** seamlessly merges with the arm extensions **4** which extend along both sides of the buccal region, neck and below the ear, terminating adjacent to the back of the shoulders. The arm extensions merge with the top of the cradle at a perpendicular angle of 90°; however it should be noted that there is scope to adjust the angle to within 45° and 135°. The arm extensions **4** enable the user to rest the side of the head either to the left or right towards the shoulder. The head may be tilted towards any point on the top of the arm extensions **5,** whilst the lower portion of the arm supports **6** are anchored on top of the shoulders. The arm extensions **4** create support between the head and the shoulder preventing the head from tilting to an uncomfortable degree when the user is rested. The arm extensions **4** are also designed to distribute some of the weight from the neck onto the shoulders when the head is held in the cradle **2,** preventing the neck muscles from straining or stiffening due to supporting the entire upper body for prolonged periods. By anchoring the device on the shoulders, it enables the shoulders to absorb some of the weight away from the neck and spreading it onto a much broader and stronger region.

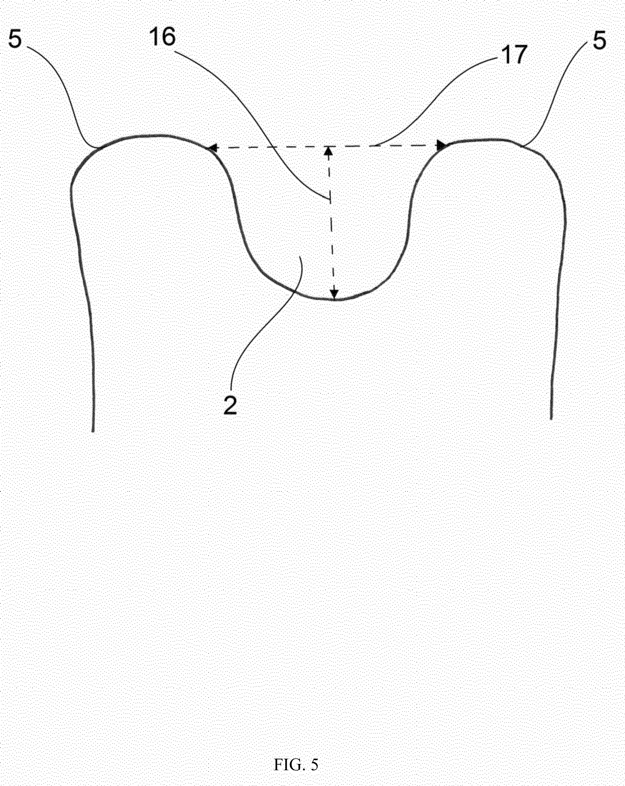

**FIG. 5** illustrates the head cradle **2** in a magnified view, which is semicircular with an upward curvature from the center **16** of preferably between 3cm to 15cm in depth. The distance **17** between the two highest points of the cradle or between the peaks of the two arm extensions **5** is between 5cm to 25cm. The ergonomic cradle is wide and deep enough to support the lower jaw and face cheeks, allowing the head to comfortably maneuver left to right without adjusting the entire device. When the head is rested in the cradle, it creates downward pressure onto the device, and between the neck and thighs; however, by anchoring the arm extensions on the shoulders, some of the weight is spread onto the broader area.

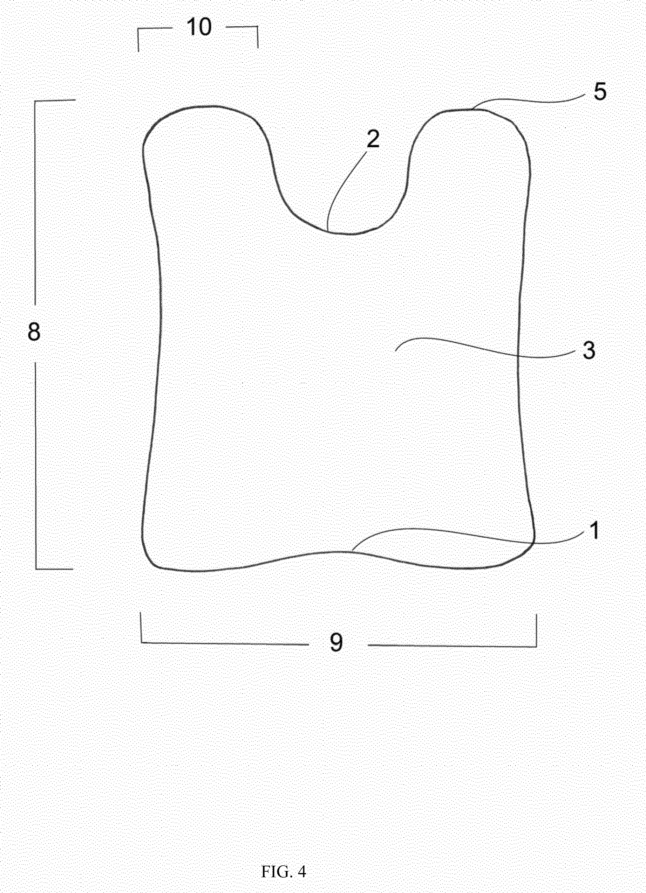

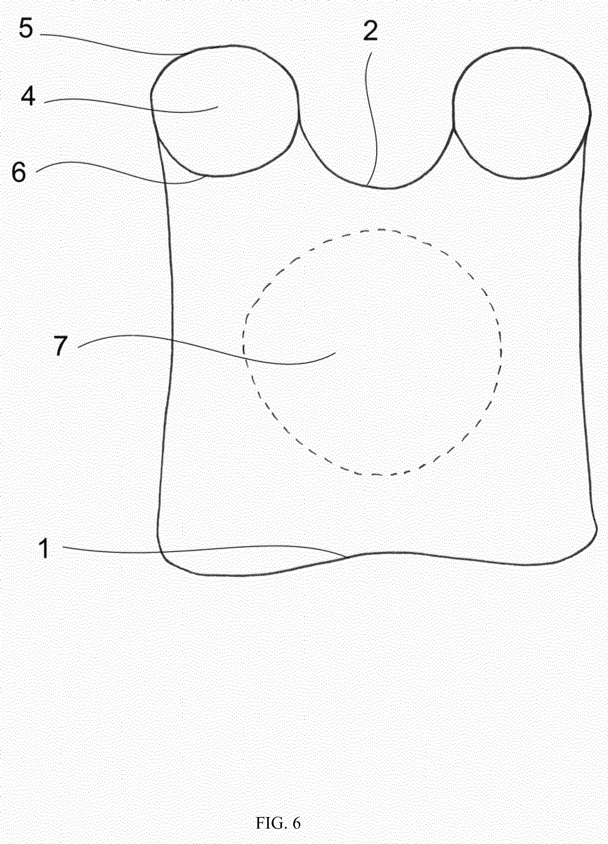

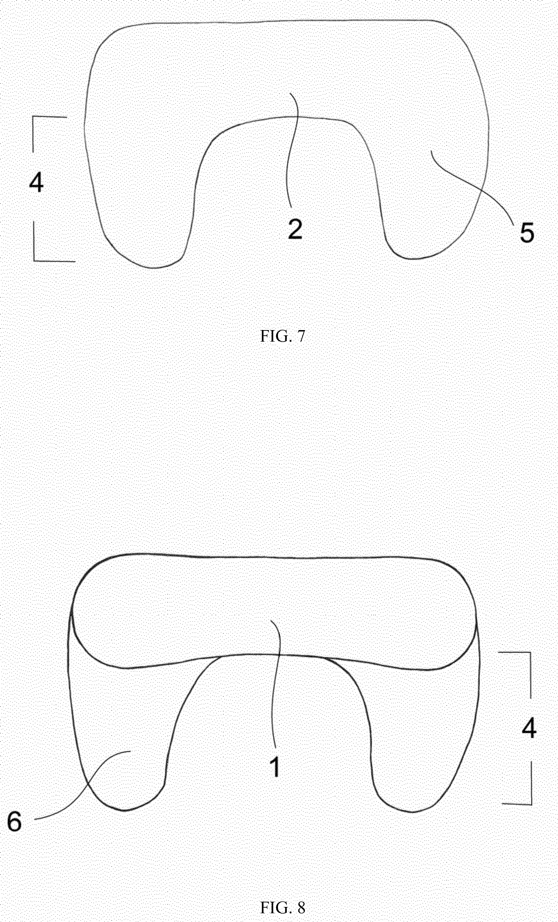

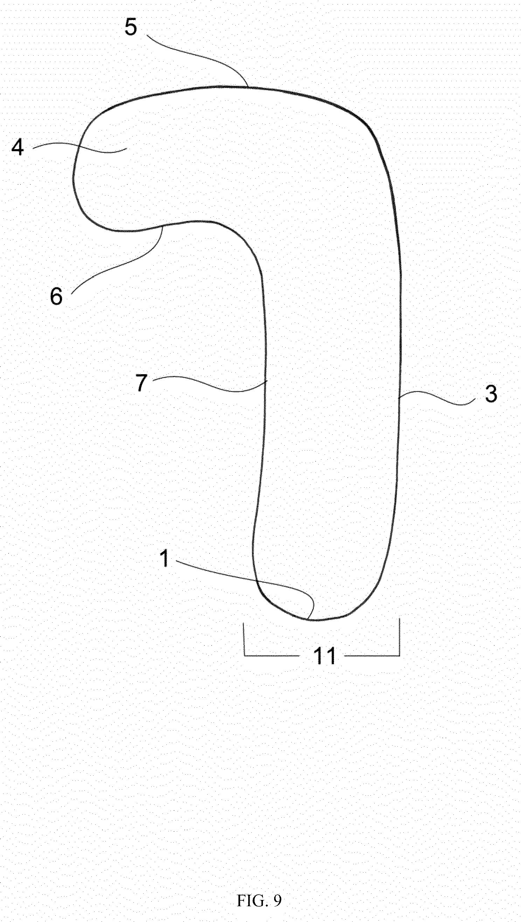

**FIG. 4** highlights the frontal perspective of the travel device as a singular unit. In length **8,** the device measures between 20cm to 60cm, from the bottom **1** to the top of the arm extensions **5,** and between 15cm to 50cm in width **9.** **FIG. 6** and **FIG. 9** illustrate the device overall consistent thickness **11** of between 3cm to 10cm consistent from the top to the bottom, narrowing or widening marginally except at the middle **7,** which is much thinner due to the contoured dip in the back section, to accommodate either the user's head and buttocks when required. In **FIG. 8****,** the arm extensions **4** have a length of approximately between 5cm and 28cm and a width **10** of between 3cm to 10cm. The arm extensions **4** are generally rounded; however, they can vary in three dimensional construction based on styling, that is, varying from a minimal three sided triangular prism shaping to a maximum cylindrical shape. The cylindrical shape is best preferred for the most comfort; however, other shapes can be utilized in keeping with the invention.

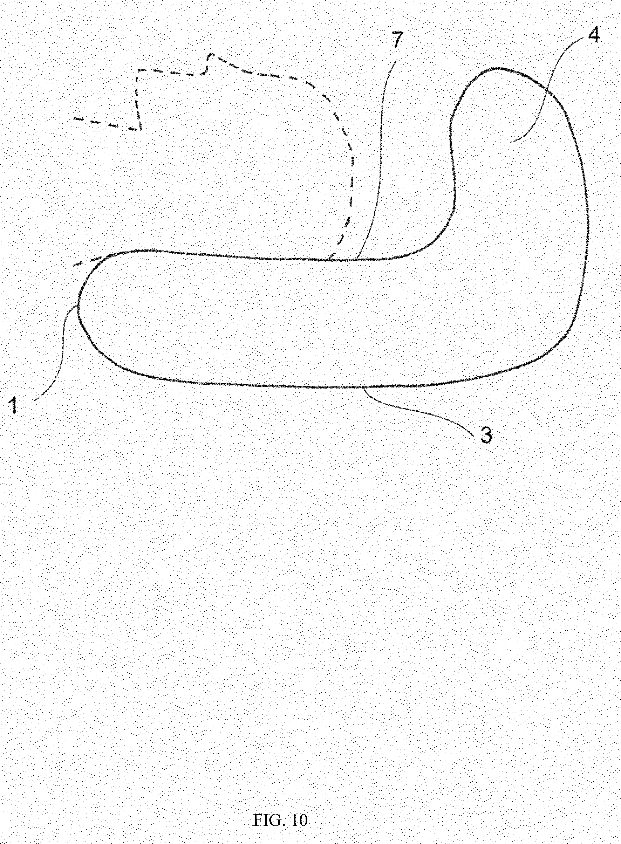

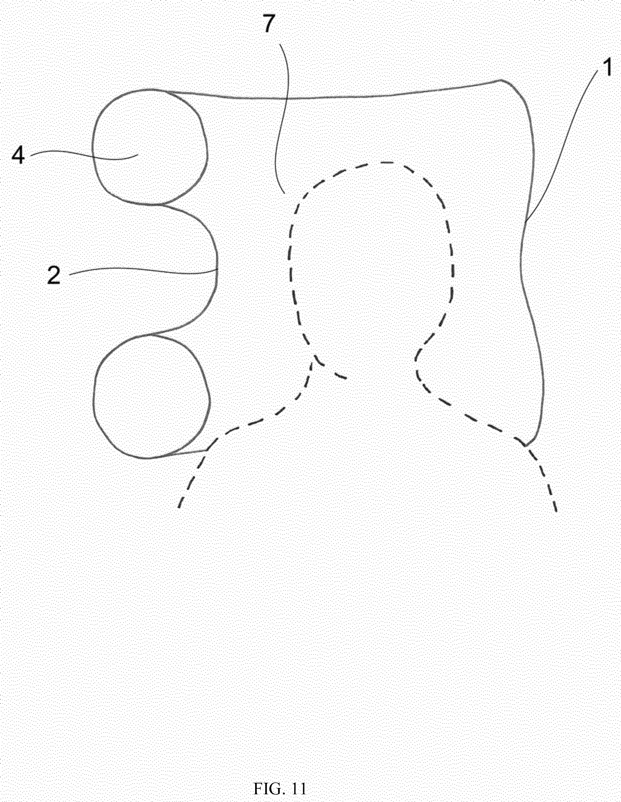

The device may also be used as a conventional pillow as represented by **FIG. 10** and **FIG. 11****,** by positioning the back section behind the user's head against an adjacent surface. The device can be rotated and repositioned with the head placed in the back section dip **7** and used against another approximately horizontal or vertical surface. This allows the traveler to use the travel support device as a cushion reclining against the adjacent surface.

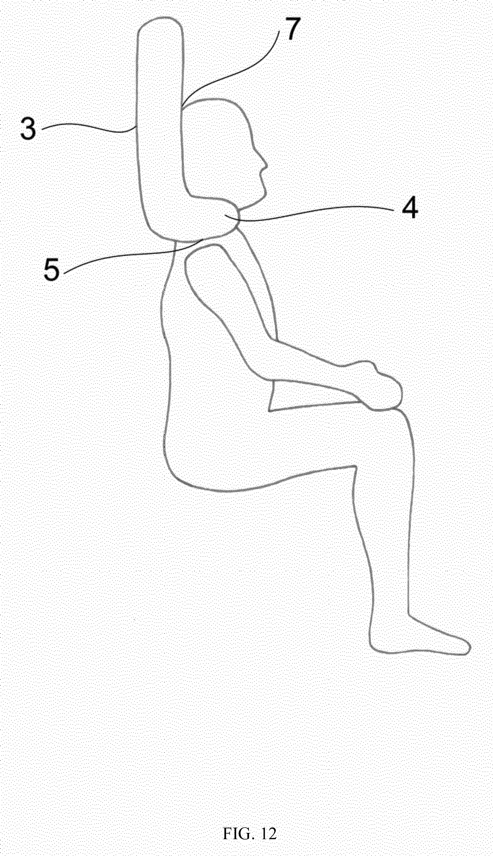

In addition, **FIG. 12** illustrates how the travel device is used as a head support by wedging the cradle **2** and arm extensions **4** around the neck from the back and the head positioned in the back middle dip **7.** The top of the arm extensions **5** rest on the shoulders, whilst the lower portion of the arm extensions **6** create an area on which the head can rest/tilt on. Accordingly, the back section and dip are positioned behind the user's head, with the cradle situated behind the neck and the arm extensions fixed on the shoulders along the side of the neck creating a horseshoe shape structure for the head to tilt into backwards and sideways, permitting the individual to recline onto an adjacent surface. This use of the device enables the traveler to recline against the adjacent surface and still have the head and neck comfortably supported.

The contoured middle dip **7** on the back is preferably rounded, square, or circular in shape with a maximum depth of between 1cm and 4cm, and a diameter of between 7cm and 40cm end to end. Its composition permits the head to be accommodated from any direction that the travel device is used whilst also serving as support for the buttocks as next described.

The contoured middle dip **7** may also be used for buttock support when utilized as a seat support **FIG. 14****.** The device is used as a seat, seat cushion or for height enhancement by placing the approximately flat front **3** down on the intended sitting area, such as a horizontal flat supporting surface, with the arm extensions **4** in a vertical position. The buttocks are positioned in the dip **7** of the back section, and the device increases the sitting height of the user proportionally to the overall thickness of the middle portion, of between 3cm to 10cm.

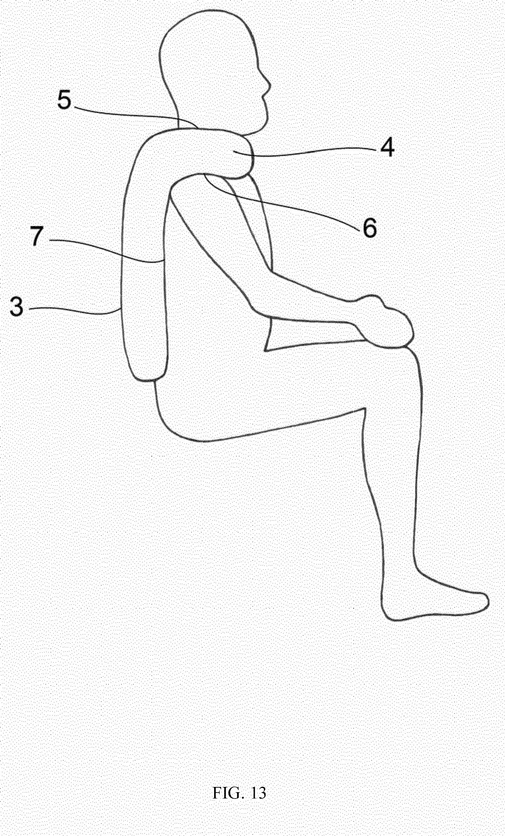

**FIG. 13** represents a different use of the travel support device in which the back of the travel device **7** is positioned along the user's back allowing the user to lean against an adjacent surface while in a seated upright position, with the arm extensions **4** anchored on the user's shoulders along the side of the neck towards the user's face, effectively creating a horseshoe cradle into which the head can recline backwards and tilt sideways into. The front **3** of the travel device makes contact with the receiving surface, cushioning and supporting the user when reclining. The back section of the device is positioned against the individual's back, with the head cradle situated behind the neck.

The user has the option of tilting the head onto the adjacent surface or into the cradle **2,** or sideways onto the arm extensions **4.** On the arm extensions, the head can be placed on the top portion of the arm extensions **5,** with the lower portion **6** anchored on the shoulders.

**FIG. 15** represents a use of travel support device as a portable desk and work surface, wherein the back section is positioned on top of the thighs and the arm extensions **4** are closely positioned on the side of the thighs for stability. The arm extensions **4** will essentially be hooked onto any one thigh allowing the user to adjust the device accordingly to prevent it from shifting. The front **3** becomes a stable usable flat surface for working, dining, writing or for supporting other devices.

**FIG. 16** represents a second embodiment of the travel support device, which is the same as the first embodiment, except for that the device features a storage compartment **18,** positioned between the bottom **1** and the head cradle **2.** The storage compartment is accessible by an entrance located preferably at the front **3** which can be square, rectangular, circular, or irregular. It should be known that the storage compartment **18** could also be accessed from the bottom **1** or the back section, by repositioning the entrance. The storage compartment can vary in dimensions and can take up the majority of the device space, excluding the extension arms.

Furthermore, as shown in **FIG. 16****,** the travel support device is fitted with adjustable carry straps **19,** which are attached to the arm extensions **4** and the bottom **1** of the device. The support straps can be used to carry the device by placing it along the user's back and resting the lower arm portions **6** on the shoulders, whilst the straps go over the front of the shoulder to the bottom **1.** In addition, the straps may be used to keep the device in place by securing the straps **19** behind the user's shoulders when the device is used as a pillow in a seated position like as shown in **FIG 1****.**

The overall stated dimensions of the device are scalable in relation to the user's physical size, that is, height and weight. The size can be adjusted proportionally according to the dimensions of the individual in keeping with the device measurements.

The travel support device may be constructed with preferably any light weight material that enables the formation of a unitary rigid frame-like structure, such as moldable polymers, carbon fiber, foam, rubber or air, that allows the user to be appropriately supported when the device is positioned between the head and the thighs, can also be used as a portable desk and support seat. In addition, a combination of softer materials and rigid materials may be used to manufacture the travel device making it rigid enough to prop up the upper body yet soft enough to be comfortable on the thighs, lower jaw and face. For added comfort, the manufacturing process can incorporate softer materials to line the bottom **1,** cradle **2** and arm extensions **4.** The device may be one solid structure, or may be wholly or partially hollow, dependent on the materials used and additional features included in the device. The methods and materials of manufacture are not exhaustive and other variations of approaches will be used in keeping with the principal idea.

In another embodiment, a collapsible version of the device is introduced that can be filled with gases, water or beads via regulation valve or spout located on either the sides, bottom or back of the device which would not impede with the user. When not in use, the contents of the device can be removed via the valve or spout making it compact and easy to store.

**FIG. 17a** shows the travel support device and a carrying bag accessory in the form of a backpack or rucksack type bag, to store the device while traveling. The bag is carried on the back, and features a travel device storage compartment **12** located between the general storage section **13** and the adjustable shoulder straps **14.** The travel device is slotted into the compartment **12** via the top opening. **FIG 17b** illustrates one of two ways that travel device can be stored in the specialized bag. The travel device may be placed in the device compartment **12** with the arm extensions **4** resting on the bags general storage compartment **13,** with the bottom of the arm extensions **6** conforming to the top of the bag compartment, near or over the bag zip/closure **15.** **FIG 17c** illustrates the second method in which the device may be stored in the device compartment **12,** with the arm extensions **4** facing away from the storage compartment **13** and resting on the upper section of the bag carry straps **14.** When carried over the shoulder, the lower portion of the extension arms **6** rest on top of the backpack straps **14,** which in turn rest upon the shoulders.

The bag has overall dimensions of between 20cm Length x 10cm Width x 10cm Depth and 65cm Length x 50cm Width x 50cm Depth. The general storage compartment **13** of the bag may be manufactured in either fabric material such as canvas, leather, cotton, and CORDURA®, or in hard shell material such as polycarbonate, polypropylene or carbon fiber. The travel device storage compartment **12** and the straps **14** are preferably manufactured with durable flexible fabric material. It should be noted that other materials may be used, and the aforementioned materials are not exhaustive.

In another embodiment, the travel device has a fitted conforming cover that is both removable and washable. The cover can be fitted from the top of the device beginning on the arms **4** and channeled down to the bottom **1.** The conforming cover may be elasticated, fitted with a zip or a drawstring at the bottom **1,** to keep it secure. The cover may also feature open pockets for storage at the front **3,** the sides or the back **7** of the travel device. The cover may be manufactured with a number of soft materials such as foam, polar fleece, or wool; however, other soft materials may be used and the materials list is not exhaustive.

It is to be understood by persons skilled in the art that even though reference is made to a specific support and multi-purpose travel device, any variations of this invention which utilize the features described are to be considered part of this invention, within the scope of the accompanying claims.

## Claims

1. A travel support device for supporting a head of a human whilst in a sitting position, the travel support device comprising a top portion, a bottom portion, and a middle portion extending from the top portion to the bottom portion, wherein:
the top portion comprises a head cradle (2) for receiving the head of a human with a front side of the travel support device facing forwardly in a same direction as the human;
the middle portion comprises a front section (3) extending from the top portion to the bottom portion at the front side of the travel support device, and a back section extending from the top portion to the bottom portion, at an opposite side of the middle portion from the front section (3), wherein the back section has a dip (7) which reduces a thickness (11) of the middle portion between the front and back sections at the dip;
the bottom portion comprises a bottom edge (1) for resting upon the thighs of the human whilst the human is in a sitting position with the head of the human received in the head cradle (2), the middle portion transmitting the weight of the head to the thighs;
the head cradle (2) is a cut-away in the top portion, the cut-away being centered at half-way across a width of the travel support device and being in a top edge of the travel support device, the top edge being opposite from the bottom edge, and
**characterised in that** the dip (7) is a substantially circular depression in the back section, for receiving the head or the buttocks of the human when the travel support device is positioned in an alternate orientation relative to the human.

2. The travel support device of claim 1, wherein the top portion further comprises two arm extensions (4) which extend backwardly away from the head cradle (2), in a direction substantially perpendicular to the extension (8) of the middle portion from the top portion to the bottom portion, for locating over respective shoulders of the human.

3. The travel support device of claim 2, wherein shoulder support straps (19) are attached to each arm extension (4) and the bottom portion.

4. The travel support device of claim 1, 2, or 3, wherein a width direction (9) of the travel support device extends perpendicular to the extension (8) of the middle portion from the top portion to the bottom portion, and perpendicular to the thickness (11) of the middle portion between the front and back sections.

5. The travel support device of claim 4, wherein the widths of the top, middle, and bottom portions are substantially a same width as one another.

6. The travel support device of claim 4 or 5, wherein the thickness (11) of the middle portion all along the width of the middle portion at the bottom portion, is greater than the thickness at the dip (7).

7. The travel support device of any preceding claim, further comprising a storage compartment (18) located between the head cradle (2) and the bottom edge (1), and being accessible from either the front section, back section, or bottom edge.

8. The travel support device of any preceding claim, wherein the travel support device is a singular body.

9. The travel support device of any preceding claim, wherein the travel support device is collapsible and can be filled via a regulation valve, with gas, liquid, or beads.

10. The travel support device of any preceding claim, wherein the travel support device is encased in a removable and washable cover.

11. The travel support device of claim 10, wherein the removable and washable cover comprises open pockets located at the front, the back and the sides.

12. The travel support device of any preceding claim, having dimensions of between 20cm and 60cm in length, between 15cm and 50cm in width, and between 3cm and 10cm in thickness.

13. The travel support device of any preceding claim, having a back section dip (7) of between 1cm and 4cm in depth over a diameter of between 7cm and 40cm, a head cradle width (17) of between 5cm and 25cm and a head cradle depth (16) of between 3cm and 17cm, arm extension (4) lengths of between 5cm and 28cm length and arm extension widths of between 3cm and 10cm.

14. The travel support device of any preceding claim, wherein the front section is planar at the front side of the travel device.

15. The travel support device of any preceding claim, housed in a housing (12) of a rucksack or backpack type bag, the housing being an approximately cuboid shaped housing located between shoulder straps (14) of the bag and a main bag storage compartment (13) of the bag.

## Patentansprüche

1. Reisestützvorrichtung zum Abstützen eines Kopfs eines Menschen, während er in einer sitzenden Position ist, wobei die Reisestützvorrichtung einen oberen Teil, einen unteren Teil und einen mittleren Teil umfasst, der sich von dem oberen Teil zu dem unteren Teil erstreckt, wobei:
der obere Teil eine Kopfwanne (2) zum Aufnehmen des Kopfs eines Menschen umfasst, wobei eine Vorderseite der Reisestützvorrichtung in einer gleichen Richtung wie der Mensch nach vorne ausgerichtet ist;
der mittlere Teil einen vorderen Abschnitt (3), der sich an der Vorderseite der Reisestützvorrichtung von dem oberen Teil zu dem unteren Teil erstreckt, und einen hinteren Abschnitt umfasst, der sich auf einer zu dem vorderen Abschnitt (3) entgegengesetzten Seite des mittleren Teils von dem oberen Teil zu dem unteren Teil erstreckt, wobei der hintere Abschnitt eine Mulde (7) hat, die eine Dicke (11) des mittleren Teils zwischen dem vorderen und dem hinteren Abschnitt an der Mulde verringert;
der untere Teil einen unteren Rand (1) zum Ruhen auf den Schenkeln des Menschen umfasst, während der Mensch in einer sitzenden Position ist, wobei der Kopf des Menschen in der Kopfwanne (2) aufgenommen ist, wobei der mittlere Teil das Gewicht des Kopfs auf die Schenkel überträgt;
die Kopfwanne (2) ein Ausschnitt in dem oberen Teil ist, wobei der Ausschnitt auf halbem Weg einer Breite der Reisestützvorrichtung zentriert ist und in einem oberen Rand der Reisestützvorrichtung ist, wobei der obere Rand zum unteren Rand entgegengesetzt ist, und
**dadurch gekennzeichnet, dass** die Mulde (7) eine im Wesentlichen kreisförmige Vertiefung in dem hinteren Abschnitt ist, um den Kopf oder die Gesäßbacken des Menschen aufzunehmen, wenn die Reisestützvorrichtung in einer alternativen Ausrichtung relativ zu dem Menschen angeordnet ist.

2. Reisestützvorrichtung gemäß Anspruch 1, wobei der obere Teil ferner zwei Armerweiterungen (4) umfasst, die sich von der Kopfwanne (2) nach hinten weg in einer Richtung im Wesentlichen senkrecht zu der Erstreckung (8) des Mittelteils von dem oberen Teil zu dem unteren Teil erstrecken, um jeweils über die Schultern des Menschen angeordnet zu werden.

3. Reisestützvorrichtung gemäß Anspruch 2, wobei Schultertragegurte (19) an jeder Armerweiterung (4) und dem unteren Teil befestigt sind.

4. Reisestützvorrichtung gemäß Anspruch 1, 2 oder 3, wobei sich eine Breitenrichtung (9) der Reisestützvorrichtung senkrecht zu der Erstreckung (8) des mittleren Teils von dem oberen Teil zu dem unteren Teil und senkrecht zu der Dicke (11) des mittleren Teils zwischen dem vorderen und dem hinteren Abschnitt erstreckt.

5. Reisestützvorrichtung gemäß Anspruch 4, wobei die Breiten des oberen, des mittleren und des unteren Teils einander im Wesentlichen gleichen.

6. Reisestützvorrichtung gemäß Anspruch 4 oder 5, wobei die Dicke (11) des mittleren Teils entlang der gesamten Breite des mittleren Teils an dem unteren Teil größer als die Dicke an der Mulde (7) ist.

7. Reisestützvorrichtung gemäß einem der vorhergehenden Ansprüche, ferner umfassend ein Aufbewahrungsabteil (18), das zwischen der Kopfwanne (2) und dem unteren Rand (1) angeordnet ist und von einem aus dem vorderen Abschnitt, dem hinteren Abschnitt oder dem unteren Rand aus zugänglich ist.

8. Reisestützvorrichtung gemäß einem der vorhergehenden Ansprüche, wobei die Reisestützvorrichtung in einstückiger Körper ist.

9. Reisestützvorrichtung gemäß einem der vorhergehenden Ansprüche, wobei die Reisestützvorrichtung zusammenlegbar ist und über ein Regelventil mit Gas, einer Flüssigkeit oder Kügelchen gefüllt werden kann.

10. Reisestützvorrichtung gemäß einem der vorhergehenden Ansprüche, wobei die Reisestützvorrichtung in einen abnehmbaren und waschbaren Überzug eingehüllt ist.

11. Reisestützvorrichtung gemäß Anspruch 10, wobei der abnehmbare und waschbare Überzug offene Taschen umfasst, die vorne, hinten und an den Seiten angeordnet sind.

12. Reisestützvorrichtung gemäß einem der vorhergehenden Ansprüche, deren Abmessungen eine Länge von zwischen 20 cm und 60 cm, eine Breite von zwischen 15 cm und 50 cm und eine Dicke von zwischen 3 cm und 10 cm sind.

13. Reisestützvorrichtung gemäß einem der vorhergehenden Ansprüche, die eine Mulde (7) am hinteren Abschnitt mit einer Tiefe zwischen 1 cm und 4 cm über einem Durchmesser zwischen 7 cm und 40 cm hat, eine Breite der Kopfwanne (17) zwischen 5 cm und 25 cm und eine Tiefe der Kopfwanne (16) zwischen 3 cm und 17 cm, Längen der Armerweiterungen (4) zwischen 5 cm und 28 cm und Breiten der Armerweiterungen zwischen 3 cm und 10 cm hat.

14. Reisestützvorrichtung gemäß einem der vorhergehenden Ansprüche, wobei der vordere Abschnitt an der vorderen Seite der Reisevorrichtung plan ist.

15. Reisestützvorrichtung gemäß einem der vorhergehenden Ansprüche, die in einem Gehäuse (12) einer Rucksack- oder Backpack-artigen Tasche untergebracht ist, wobei das Gehäuse ein ungefähr quaderförmiges Gehäuse ist, das zwischen den Schultergurten (14) der Tasche und einem Haupttaschen-Speicherabteil (13) der Tasche angeordnet ist.

## Revendications

1. Dispositif de support de voyage pour supporter une tête d'un être humain dans une position assise, le dispositif de support de voyage comprenant une partie supérieure, une partie inférieure et une partie centrale de la partie supérieure à la partie inférieure, dans lequel :
la partie supérieure comprend un support de tête (2) pour recevoir la tête d'un être humain avec un côté avant du dispositif de support de voyage orienté vers l'avant dans la même direction que l'être humain ;
la partie centrale comprend une section avant (3) s'étendant de la partie supérieure à la partie inférieure au niveau du côté avant du dispositif de support de voyage, et une section arrière s'étendant de la partie supérieure à la partie inférieure, au niveau d'un côté opposé de la partie centrale à partie de la section avant (3), dans lequel la section arrière a un creux (7) qui réduit une épaisseur (11) de la partie centrale entre les sections avant et arrière au niveau du creux ;
la partie inférieure comprend un bord inférieur (1) pour s'appuyer sur les cuisses de l'être humain alors que l'être humain est dans une position assise avec la tête de l'être humain reçue dans le support de tête (2), la partie centrale transmettant le poids de la tête aux cuisses ;
le support de tête (2) est une découpe dans la partie supérieure, la découpe étant centrée à mi-chemin d'un côté à l'autre d'une largeur du dispositif de support de voyage et étant dans un bord supérieur du dispositif de support de voyage, le bord supérieur étant opposé au bord inférieur, et
**caractérisé en ce que** le creux (7) est un enfoncement sensiblement circulaire dans la section arrière, pour recevoir la tête ou les fesses de l'être humain lorsque le dispositif de support de voyage est positionné dans une orientation alternée par rapport à l'être humain.

2. Dispositif de support de voyage selon la revendication 1, dans lequel la partie supérieure comprend en outre deux extensions de bras (4) qui s'étendent vers l'arrière à distance du support de tête (2), dans une direction sensiblement perpendiculaire à l'extension (8) de la partie centrale, de la partie supérieure à la partie inférieure, pour se positionner sur les épaules respectives de l'être humain.

3. Dispositif de support de voyage selon la revendication 2, dans lequel les bretelles de support (19) sont fixées à chaque extension de bras (4) et à la partie inférieure.

4. Dispositif de support de voyage selon la revendication 1, 2 ou 3, dans lequel une direction de largeur (9) du dispositif de support de voyage s'étend perpendiculairement à l'extension (8) de la partie centrale, de la partie supérieure à la partie inférieure, et perpendiculaire à l'épaisseur (11) de la partie centrale entre les sections avant et arrière.

5. Dispositif de support de voyage selon la revendication 4, dans lequel les largeurs des parties supérieure, centrale et inférieure ont sensiblement la même largeur les unes par rapport aux autres.

6. Dispositif de support de voyage selon la revendication 4 ou 5, dans lequel l'épaisseur (11) de la partie centrale tout le long de la largeur de la partie centrale au niveau de la partie inférieure, est supérieure à l'épaisseur au niveau du creux (7).

7. Dispositif de support de voyage selon l'une quelconque des revendications précédentes, comprenant en outre un compartiment de stockage (18) positionné entre le support de tête (2) et le bord inférieur (1) et étant accessible depuis la section avant, la section arrière ou bien le bord inférieur.

8. Dispositif de support de voyage selon l'une quelconque des revendications précédentes, dans lequel le dispositif de support de voyage est un corps unique.

9. Dispositif de support de voyage selon l'une quelconque des revendications précédentes, dans lequel le dispositif de support de voyage peut se replier et peut être rempli via une valve de régulation, avec du gaz, du liquide ou des billes.

10. Dispositif de support de voyage selon l'une quelconque des revendications précédentes, dans lequel le dispositif de support de voyage est enfermé dans une couverture amovible et lavage.

11. Dispositif de support de voyage selon la revendication 10, dans lequel la couverture amovible et lavage comprend des poches ouvertes positionnées au niveau de la partie avant, de la partie arrière et des côtés.

12. Dispositif de support de voyage selon l'une quelconque des revendications précédentes, ayant des dimensions comprises entre 20 cm et 60 cm en longueur, entre 15 cm et 50 cm en largeur et entre 3 cm et 10 cm en épaisseur.

13. Dispositif de support de voyage selon l'une quelconque des revendications précédentes, ayant un creux de section arrière (7) compris entre 1 cm et 4 cm en profondeur sur un diamètre compris entre 7 cm et 40 cm, une largeur de support de tête (17) comprise entre 5 cm et 25 cm et une profondeur de support de tête (16) comprise entre 3 cm et 17 cm, des longueurs d'extension de bras (4) comprises entre 5 cm et 28cm et des largeurs d'extension de bras comprises entre 3 cm et 10 cm.

14. Dispositif de support de voyage selon l'une quelconque des revendications précédentes, dans lequel la section avant est planaire au niveau du côté avant du dispositif de voyage.

15. Dispositif de support de voyage selon l'une quelconque des revendications précédentes, logé dans un boîtier (12) de type sac à dos, le boîtier étant un boîtier de forme approximativement cuboïde positionné entre les bretelles (14) du sac et un compartiment de stockage de sac principal (13) du sac.
